# EUROPEAN PATENT APPLICATION

(11) **EP 4 354 061 A1**
(43) Date of publication of application: **17.04.2024**
(21) Application number: 21945006.1
(22) Date of filing: 07.06.2021
(51) Int. Cl.: F26B 21/00

(54) **DRYING EQUIPMENT FOR PAINTING**

(71) Applicant: TAIKISHA LTD., Tokyo 160-6129 (JP)
(72) Inventor: ISHIDA, Kozo, Tokyo 160-6129 (JP); KOIKE, Toshihiko, Tokyo 160-6129 (JP); YAMASHITA, Tomoo, Tokyo 160-6129 (JP); TAKIZAWA, Yukiya, Tokyo 160-6129 (JP); KATO, Daiyu, Toyota-shi, Aichi 471-8571 (JP); TAKISHIMA, Kai, Toyota-shi, Aichi 471-8571 (JP); TANGE, Hidenori, Toyota-shi, Aichi 471-8571 (JP)
(74) Representative: Schön, Christoph
(86) International application number: PCT/JP2021/021598
(87) International publication number: WO 2022/259325

(57) **Abstract**

To provide a coating drier facility that has only a small heat loss and saves energy, a coating drier facility includes: a drier chamber 2 configured to dry a coated object; a heater for heating air; an air supplier for supplying the air heated by the heater into the drier chamber 2; an air collector for collecting air from the drier chamber 2; and a treatment device for treating a volatile substance in the air that the air collector has collected, wherein the heater doubles as the treatment device.

## Description

### Technical Field

The present embodiment relates to a coating drier facility including: a drier chamber configured to dry a coated object; a heater for heating air; an air supplier for supplying the air heated by the heater into the drier chamber; an air collector for collecting air from the drier chamber; and a treatment device for treating a volatile substance in the air that the air collector has collected.

### Background Art

A typical coating drier facility for drying, for example, a coated automobile or parts thereof includes a drier chamber with an internal temperature kept within the range of approximately 120°C to 180°C. The coating drier facility is configured to carry a coated object through the drier chamber over a period of 30 minutes to bake and harden the coating layer.

The coating drier facility includes heating means for heating air to be supplied into the drier chamber. The heating means is a heating furnace of not a direct heating type but an indirect heating type (indirect heating furnace) to prevent, in particular, a nitrogen oxide in gas combusted by the burner from adversely affecting the coating layer. This tendency is high for a step of drying a top coating.

The coating drier facility also includes a deodorizing furnace as treating means for treating a foul-smelling volatile substance (VOC) generated during the process of baking and hardening the coating layer. Volatile substances are said to be oxidatively degraded upon heating at 750°C to 800°C or higher for approximately 0.8 seconds. The deodorizing furnace is configured to treat a volatile substance accordingly.

A known coating drier facility is disclosed in, for example, Patent Literature 1 below. The coating drier facility disclosed therein includes an indirect heating furnace and deodorizing furnace described above as separate members.

### Citation List

### Patent Literature

Patent Literature 1
Japanese Unexamined Patent Application Publication, Tokukai, No. 2014-238199

### Summary of Invention

### Technical Problem

Conventional coating drier facilities include an indirect heating furnace that causes a heat loss of approximately 10% to 15% of the amount of combustion by the burner. This heat loss is due to discharge of combustion air from the burner at the indirect heating furnace.

Further, conventional coating drier facilities typically recover heat from exhaust gas from the deodorizing furnace, heat outside air with the recovered heat, and introduce the heated outside air into the drier chamber for ventilation. The drier chamber lets air flow out as a result of the ventilation to the deodorizing furnace, which then oxidizes the air and lets the oxidized air out of the facility. The ventilation of the drier chamber and discharge of exhaust gas from the deodorizing furnace cause a heat loss that accounts for approximately 20% to 30% of the total amount of heat that the drier chamber consumes.

Conventional coating drier facilities include an indirect heating furnace and a deodorizing furnace that tend to cause a heat loss as described above, and leave room for improvement in terms of reducing the heat loss and saving energy.

The present invention has been accomplished in view of the above circumstances. It is an object of the present invention to provide a coating drier facility that has only a small heat loss and saves energy.

### Solution to Problem

A coating drier facility according to the present invention characteristically includes:
a drier chamber configured to dry a coated object;
a heater for heating air;
air supplier for supplying the air heated by the heater into the drier chamber;
air collector for collecting air from the drier chamber; and
a treatment device for treating a volatile substance in the air that the air collector has collected, wherein
the heater doubles as the treatment device.

With the above configuration, the heater doubles as the treatment device. This likely reduces the heat loss and saves energy as compared to a conventional configuration including a heater and a treatment device separately. The above configuration also eliminates the need to include a treatment device as a separate member, thereby reducing the facility cost.

The coating drier facility according to the present invention may preferably further include: a first heat receiver for recovering heat from exhaust gas from the heater; and a second heat receiver for recovering heat from exhaust gas from the first heat receiver.

The above configuration allows a primary heat recovery by the first heat receiver and a secondary heat recovery by the second heat receiver with respect to exhaust gas for efficient recovery of heat from exhaust gas. This results in exhaust gas from the heater having a temperature equivalent to the internal temperature of the drier chamber, thereby further reducing the heat loss by the coating drier facility.

The coating drier facility according to the present invention may preferably be configured such that the heater includes: a fuel amount adjusting mechanism; and a combustion air amount adjusting mechanism.

With the above configuration, the heater includes a fuel amount adjusting mechanism and a combustion air amount adjusting mechanism. This facilitates adjusting the temperature of the drier chamber.

The coating drier facility according to the present invention may preferably be configured such that the combustion air amount adjusting mechanism adjusts an internal temperature of a combustion treatment furnace of the heater so that the internal temperature is within a predetermined range.

The above configuration allows the combustion air amount adjusting mechanism to adjust the internal temperature of the combustion treatment furnace more rapidly and reliably.

The coating drier facility according to the present invention may preferably further include: an outside air receiver for introducing outside air into the drier chamber and including an outside air introducing amount adjusting mechanism.

With the above configuration, the outside air receiver for introducing outside air into the drier chamber includes an outside air introducing amount adjusting mechanism. This facilitates adjusting the level of a volatile substance in the drier chamber.

The coating drier facility according to the present invention may preferably be configured such that the heater includes a combustion air amount adjusting mechanism, and the coating drier facility controls the outside air introducing amount adjusting mechanism and the combustion air amount adjusting mechanism so that respective amounts of the outside air and combustion air are substantially equal to each other.

With the above configuration, the heater includes a combustion air amount adjusting mechanism, and the coating drier facility controls the outside air introducing amount adjusting mechanism and the combustion air amount adjusting mechanism so that respective amounts of the outside air and combustion air are substantially equal to each other. This helps to maintain constant the respective efficiencies of drying a coated object and treating a volatile substance.

### Brief Description of Drawings

Fig. 1 is a diagram schematically illustrating the configuration of a coating drier facility as Embodiment 1.
Fig. 2 is a diagram schematically illustrating the configuration of a coating drier facility as Embodiment 2.
Fig. 3 is a diagram schematically illustrating the configuration of a coating drier facility as Embodiment 3.

### Description of Embodiments

The description below deals with a coating drier facility as an embodiment of the present invention with reference to a drawing.

### [Embodiment 1]

### Coating Drier Facility

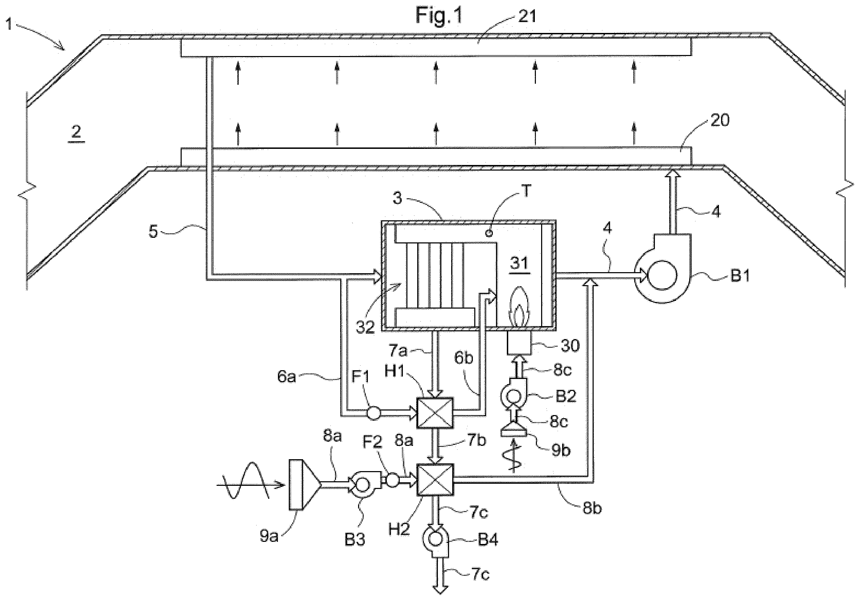

Fig. 1 illustrates a coating drier facility 1 includes (i) a drier chamber 2 for drying a coated object, (ii) a heater configured to heat air, (iii) an air supplier configured to supply the air heated by the heater into the drier chamber 2, (iv) an air collector configured to collect air from the drier chamber 2, and (v) a treatment device configured to treat a volatile substance in the air collected by the air collector.

The drier chamber 2 is configured for bake-drying, that is, to blow hot air (with a temperature of, for example, approximately 140°C) toward a coated object being conveyed by a conveyor device (not illustrated in the drawings). The coated object is, for example, a coated body or parts of an automobile.

The drier chamber 2 contains a conveyor device, an air blower header 20, and an air suction header 21. The conveyor device (not illustrated in the drawings) is configured to convey a coated object such as a coated body or parts of an automobile. The air blower header 20 is configured to blow hot air supplied from a combustion treatment furnace 3. The air suction header 21 is configured to suck and collect air from inside the drier chamber 2.

The heater includes a combustion treatment furnace 3, a fuel amount adjusting mechanism, and a combustion air amount adjusting mechanism. The combustion treatment furnace 3 is of an indirect heating type, and includes a combustion burner 30, a combustion chamber 31, and a heat exchanger 32. The fuel amount adjusting mechanism is configured to adjust the amount of fuel to be supplied to the combustion burner 30. The combustion air amount adjusting mechanism is configured to adjust the amount of air to be supplied to the combustion burner 30.

The air supplier includes an air supply duct 4 and an air supply fan B1 interposed partway through the air supply duct 4. The combustion treatment furnace 3 is connected with the air blower header 20 in the drier chamber 2 through the air supply duct 4.

The air collector includes an air collection duct 5. The combustion treatment furnace 3 is connected with the air suction header 21 in the drier chamber 2 through the air collection duct 5.

The coating drier facility 1 further includes a first heat exchanger H1, a second heat exchanger H2, and an outside air receiver. The first heat exchanger H1 (first heat receiver) is configured to recover heat from exhaust gas from the combustion treatment furnace 3. The second heat exchanger H2 (second heat receiver) is configured to recover heat from exhaust gas from the first heat exchanger H1. The outside air receiver is configured to introduce outside air into the drier chamber 2.

The first heat exchanger H1 is connected with the combustion treatment furnace 3 through a first exhaust gas duct 7a. The second heat exchanger H2 is connected with the first heat exchanger H1 through a second exhaust gas duct 7b. The second heat exchanger H2 is provided with a third exhaust gas duct 7c configured to discharge exhaust gas out of the facility. The third exhaust gas duct 7c is provided with a discharge fan B4 interposed partway therethrough.

Activating the discharge fan B4 causes exhaust gas from the combustion treatment furnace 3 to be discharged sequentially through the first exhaust gas duct 7a, the first heat exchanger H1, the second exhaust gas duct 7b, the second heat exchanger H2, and the third exhaust gas duct 7c and out of the facility.

The air collection duct 5, upstream of the combustion treatment furnace 3, has a branch as a first combustion air supply duct 6a connected with the first heat exchanger H1.

The first heat exchanger H1 is connected with the combustion chamber 31 through a second combustion air supply duct 6b.

The outside air receiver includes a first outside air introducing section 9a configured to introduce outside air and an outside air introducing amount adjusting mechanism configured to adjust the amount of outside air to be introduced.

The first outside air introducing section 9a is connected with the second heat exchanger H2 through a first outside air introduction duct 8a. The first outside air introduction duct 8a is provided with an outside air introducing fan B3 interposed partway therethrough.

The outside air receiver includes a second outside air introducing section 9b connected with the combustion burner 30 through a third outside air introduction duct 8c. The third outside air introduction duct 8c is provided with a burner blower B2 interposed partway therethrough.

The second heat exchanger H2 is connected with the air supply duct 4 through a second outside air introduction duct 8b.

Activating the air supply fan B1 causes air in the drier chamber 2 to be sucked by the air suction header 21 and flow through the air collection duct 5. A portion of the air flows into the combustion treatment furnace 3 and is heated therein. The heated air flows through the air supply duct 4 and enters the drier chamber 2 through the air blower header 20. This means that the drier chamber 2 and the combustion treatment furnace 3 are connected with each other through a hot air circulation path.

Activating the discharge fan B4 causes the remaining portion of the air through the air collection duct 5 to flow through the first combustion air supply duct 6a into the first heat exchanger H1 and be preheated thereby. The preheated air flows through the second combustion air supply duct 6b into the combustion chamber 31.

Activating the burner blower B2 causes outside air to be supplied through the second outside air introducing section 9b and the third outside air introduction duct 8c into the combustion burner 30.

Activating the outside air introducing fan B3 causes outside air to flow through the first outside air introducing section 9a and the first outside air introduction duct 8a into the second heat exchanger H2 and be preheated. The preheated outside air flows through the second outside air introduction duct 8b into the air supply duct 4 to merge with air heated in the combustion treatment furnace 3. The merged air is then supplied through the air blower header 20 into the drier chamber 2.

The present embodiment is configured such that the heater doubles as the treatment device: A portion of air in the drier chamber 2 which air contains a volatile substance flows through the first and second combustion air supply ducts 6a and 6b into the combustion chamber 31. The portion is then kept therein at a high temperature that allows decomposition of the volatile substance for oxidative degradation.

The present embodiment is configured as follows: The first heat exchanger H1 preheats combustion air flowing through the first combustion air supply duct 6a (that is, a portion of air in the drier chamber 2 which air contains a volatile substance) for a primary heat recovery. The second heat exchanger H2 preheats outside air introduced through the first outside air introducing section 9a for a secondary heat recovery.

The primary and secondary heat recoveries allow exhaust gas from the combustion treatment furnace 3 to have a temperature equivalent to the internal temperature of the drier chamber 2. This further reduces the heat loss by the coating drier facility 1.

The present embodiment allows outside air to be introduced into the combustion burner 30. This prevents the burner nozzle of the combustion burner 30 from being clogged by a volatile substance in combustion air for redundancy.

### Method for Controlling Coating Drier Facility

The coating drier facility 1 as the present embodiment includes a drier chamber temperature sensor, an exhaust gas temperature sensor T, a flowmeter F1, a flowmeter F2, a fuel supply valve, and a controller. The drier chamber temperature sensor (not illustrated in the drawings) is configured to detect the internal temperature of the drier chamber 2. The exhaust gas temperature sensor T is disposed in the combustion treatment furnace 3 and configured to detect the temperature of exhaust gas from the combustion burner 30. The flowmeter F1 is configured to measure the amount of air through the first combustion air supply duct 6a. The flowmeter F2 is configured to measure the amount of air through the first outside air introduction duct 8a. The fuel supply valve functions to supply fuel to the combustion burner 30. The coating drier facility 1 may further include as necessary a VOC level sensor configured to detect the level of a volatile substance (VOC) in the drier chamber 2.

The controller is configured to control the degree of opening of the fuel supply valve and the respective outputs of the burner blower B2, the outside air introducing fan B3, and the discharge fan B4 on the basis of values indicative of the results of the detection by, for example, the drier chamber temperature sensor, the exhaust gas temperature sensor T, and the flowmeters F1 and F2.

The fuel amount adjusting mechanism, which is configured to adjust the amount of fuel to be supplied to the combustion burner 30, includes the controller and the fuel supply valve. The combustion air amount adjusting mechanism, which is configured to adjust the amount of air to be supplied to the combustion burner 30, includes the controller and the burner blower B2. The outside air introducing amount adjusting mechanism, which is configured to adjust the amount of outside air to be introduced, includes the controller and the outside air introducing fan B3.

The controller controls the fuel supply valve to adjust the amount of fuel to be supplied to the combustion burner 30 and thereby keep the internal temperature of the drier chamber 2 at a predetermined value (for example, approximately 140°C). The controller should desirably ensure an air ratio of 1.0 or more even if the fuel amount adjusting mechanism has maximized the amount of fuel to be supplied. Minimizing the amount of fuel means that the controller decreases the degree of opening of the fuel supply valve to its smallest so that the amount of fuel is, for example, approximately one-tenth of the rated amount and that the heat loss exceeds the amount of heat generated.

The controller is also configured to control the burner blower B2 for air to be supplied in proportion to the amount of fuel to achieve a predetermined air ratio.

The controller controls the burner blower B2 to keep the internal temperature of the combustion treatment furnace 3 at a predetermined value (for example, from 800°C to 1000°C). In response to the internal temperature of the combustion treatment furnace 3 exceeding a predetermined upper limit, the controller increases the amount of air that the burner blower B2 blows to adjust the internal temperature to not higher than the upper limit temperature. In response to the internal temperature of the combustion treatment furnace 3 falling below a predetermined lower limit, the controller decreases the amount of air that the burner blower B2 blows to adjust the internal temperature to not lower than the lower limit temperature.

The controller controls the outside air introducing fan B3 to adjust the amount of outside air to be introduced and thereby keep the VOC level in the drier chamber 2 within a predetermined range. The controller may determine the VOC level (hereinafter referred to also as "VOC load") on the basis of not only a value indicative of the result of the detection by a VOC level sensor, but also, for example, the number of coated objects in the drier chamber 2 or the controlled output of the combustion burner 30.

The controller is configured to control the output of, for example, the discharge fan B4 on the basis of the VOC load in the drier chamber 2 to adjust the amount of exhaust gas.

The controller should desirably control the burner blower B2 and the outside air introducing fan B3 to adjust the respective amounts of combustion air and outside air to be introduced so that the amounts are substantially equal to each other.

The controller controls the outside air introducing fan B3 to adjust the amount of outside air to be introduced so that the amount of outside air through the first outside air introduction duct 8a is substantially equal to the amount of combustion air through the first combustion air supply duct 6a. The controller for the present embodiment, for instance, controls the outside air introducing fan B3 so that the respective mass flow rates at the flowmeters F1 and F2 are substantially equal to each other. The flowmeter F1, which is disposed on the first combustion air supply duct 6a, converts the temperature of air passing therethrough into a mass flow rate. The flowmeter F2, which is disposed on the first outside air introduction duct 8a, converts the temperature of air passing therethrough into a mass flow rate. It is on the first combustion air supply duct 6a that the flowmeter F1 is disposed; the flowmeter F1 would have a poor measurement accuracy if disposed on the third exhaust gas duct 7c, through which additional air from the burner blower B2 flows, or on the second combustion air supply duct 6b, through which combustion air flows that has been heated by the first heat exchanger H1.

### [Embodiment 2]

The description below deals with a coating drier facility 1 as Embodiment 2 of the present invention with reference to a drawing. Elements of the present embodiment that are similar in configuration to those of Embodiment 1 are assigned with the same reference signs and are not described here. The description below deals mainly with elements different from those for Embodiment 1.

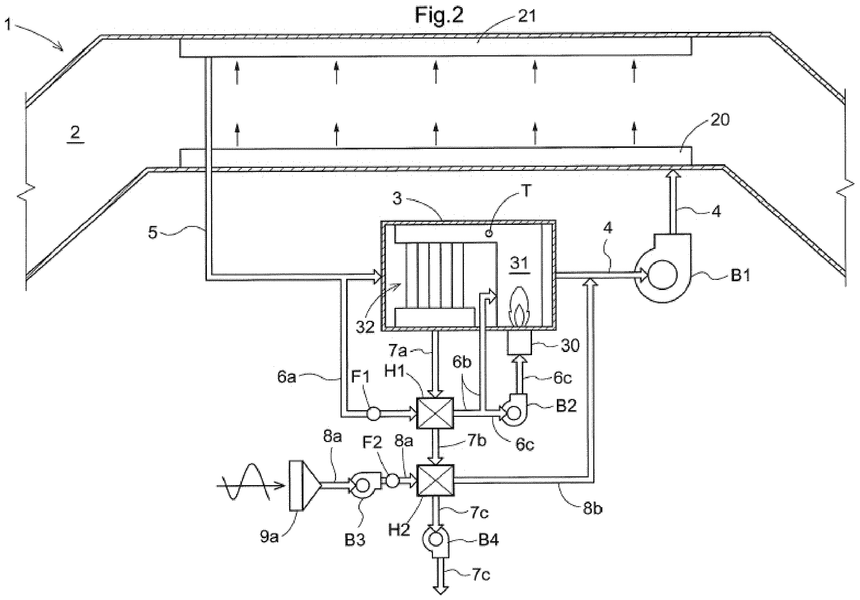

As illustrated in Fig. 2, the coating drier facility 1 as the present embodiment is configured such that the first heat exchanger H1 is connected with the combustion chamber 31 through the second combustion air supply duct 6b as well as with the combustion burner 30 through a third combustion air supply duct 6c.

The third combustion air supply duct 6c branches out from the second combustion air supply duct 6b, and is provided with the burner blower B2 interposed partway therethrough.

Activating the air supply fan B1 causes air in the drier chamber 2 to be sucked by the air suction header 21 and flow through the air collection duct 5. A portion of the air flows into the combustion treatment furnace 3 and is heated therein. The heated air flows through the air supply duct 4 and enters the drier chamber 2 through the air blower header 20. This means that the drier chamber 2 and the combustion treatment furnace 3 are connected with each other through a hot air circulation path.

Activating the discharge fan B4 causes the remaining portion of the air through the air collection duct 5 to flow through the first combustion air supply duct 6a into the first heat exchanger H1 and be preheated thereby. The preheated air flows through the second combustion air supply duct 6b into the combustion chamber 31.

Activating the burner blower B2 causes a portion of the preheated air to be supplied through the third combustion air supply duct 6c into the combustion burner 30.

The present embodiment is also configured such that the heater doubles as the treatment device: A portion of air in the drier chamber 2 which air contains a volatile substance flows through the first and second combustion air supply ducts 6a and 6b into the combustion chamber 31. Another portion of the air is supplied through the first, second, and third combustion air supply ducts 6a, 6b, and 6c into the combustion burner 30. The portions are then kept in the combustion chamber 31 at a high temperature that allows decomposition of the volatile substance for oxidative degradation.

The present embodiment is configured to use no outside air to be supplied into the combustion burner 30, thereby saving much energy. The present embodiment also allows combustion air to be introduced into the combustion burner 30 in an amount corresponding to the amount of fuel, with the result of a stable flame.

The controller for the present embodiment controls the outside air introducing fan B3 to adjust the amount of outside air to be introduced so that the amount of outside air through the first outside air introduction duct 8a is substantially equal to the amount of combustion air through the first combustion air supply duct 6a or the amount of exhaust gas through the third exhaust gas duct 7c.

### [Embodiment 3]

The description below deals with a coating drier facility 1 as Embodiment 3 of the present invention with reference to a drawing. Elements of the present embodiment that are similar in configuration to those of Embodiment 1 are assigned with the same reference signs and are not described here. The description below deals mainly with elements not included in Embodiment 1.

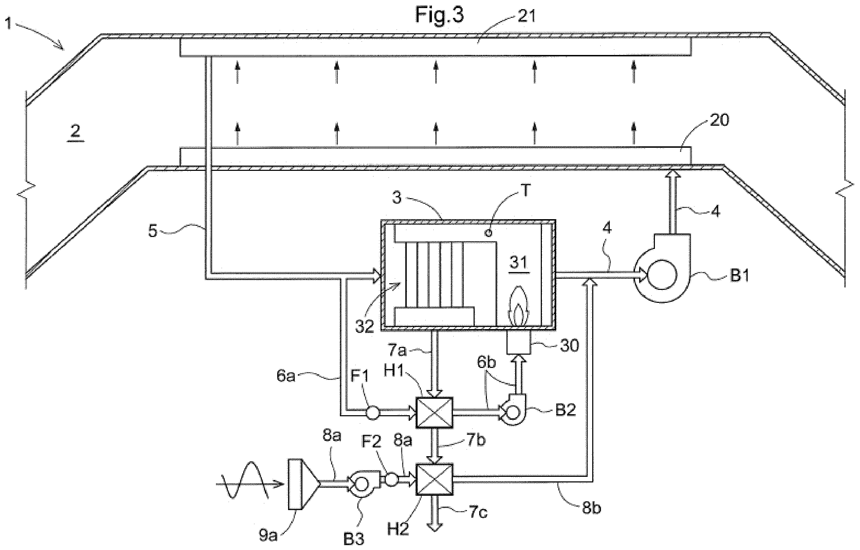

As illustrated in Fig. 3, the coating drier facility 1 as the present embodiment is configured such that the first heat exchanger H1 is connected with the combustion burner 30 through the second combustion air supply duct 6b, which is provided with the burner blower B2 interposed partway therethrough.

Activating the air supply fan B1 causes air in the drier chamber 2 to be sucked by the air suction header 21 and flow through the air collection duct 5. A portion of the air flows into the combustion treatment furnace 3 and is heated therein. The heated air flows through the air supply duct 4 and enters the drier chamber 2 through the air blower header 20. This means that the drier chamber 2 and the combustion treatment furnace 3 are connected with each other through a hot air circulation path.

Activating the burner blower B2 causes the remaining portion of the air through the air collection duct 5 to flow through the first combustion air supply duct 6a into the first heat exchanger H1 and be preheated thereby. The preheated air is supplied through the second combustion air supply duct 6b into the combustion burner 30. The burner blower B2 blows out air, which does not necessarily pass through the combustion burner 30 in its entire amount, but may partially bypass the combustion burner 30 to be supplied directly into the combustion chamber 31.

The present embodiment is also configured such that the heater doubles as the treatment device: A portion of air in the drier chamber 2 which air contains a volatile substance flows through the first and second combustion air supply ducts 6a and 6b into the combustion burner 30. The portion is then kept in the combustion chamber 31 at a high temperature that allows decomposition of the volatile substance for oxidative degradation.

The present embodiment is configured to use no outside air to be supplied into the combustion burner 30, thereby saving much energy. The present embodiment also uses the burner blower B2 to carry combustion air in its entire amount, thereby eliminating the need to include a discharge fan and simplifying the path through which combustion air is introduced into the combustion chamber 31.

The controller is configured to adjust the amount of combustion air on the basis of the VOC load in the drier chamber 2 to keep the temperature of the combustion chamber 31 within a predetermined range.

The controller for the present embodiment controls the outside air introducing fan B3 to adjust the amount of outside air to be introduced so that the amount of outside air through the first outside air introduction duct 8a is substantially equal to the amount of combustion air through the first combustion air supply duct 6a or the amount of exhaust gas through the third exhaust gas duct 7c.

### [Alternative Embodiments]

1. The embodiments described above may alternatively be each configured such that the air collection duct 5 or the air supply duct 4 is provided with a filter device interposed partway therethrough as necessary.
2. The elements and control method for an embodiment described above may be combined appropriately with those for another embodiment described above as necessary.

The description above has dealt with the present invention with reference to drawings. The present invention is, however, not limited to the arrangements illustrated in the drawings, and may be worked in various modes without departing from its scope.

### Industrial Applicability

The coating drier facility of the present invention is usable particularly suitably in technical fields involving a process of drying a coating on the body as a whole or its various parts of, for example, an automobile, a railway vehicle, an airplane, or a ship.

### Reference Signs List

- 1: Coating drier facility
- 2: Drier chamber
- 20: Air blower header
- 21: Air suction header
- 3: Combustion treatment furnace
- 30: Combustion burner
- 31: Combustion chamber
- 32: Heat exchanger
- 4: Air supply duct
- 5: Air collection duct
- 6a: First combustion air supply duct
- 6b: Second combustion air supply duct
- 6c: Third combustion air supply duct
- 7a: First exhaust gas duct
- 7b: Second exhaust gas duct
- 7c: Third exhaust gas duct
- 8a: First outside air introduction duct
- 8b: Second outside air introduction duct
- 8c: Third outside air introduction duct
- 9a: First outside air introducing section
- 9b: Second outside air introducing section
- H1: First heat exchanger
- H2: Second heat exchanger
- B1: Air supply fan
- B2: Burner blower
- B3: Outside air introducing fan
- B4: Discharge fan
- T: Exhaust gas temperature sensor
- F1, F2: Flowmeter

## Claims

1. A coating drier facility, comprising:
a drier chamber configured to dry a coated object;
a heater for heating air;
an air supplier for supplying the air heated by the heater into the drier chamber;
an air collector for collecting air from the drier chamber; and
a treatment device for treating a volatile substance in the air that the air collector has collected, wherein
the heater doubles as the treatment device.

2. The coating drier facility according to claim 1, further comprising:
a first heat receiver for recovering heat from exhaust gas from the heater; and
a second heat receiver for recovering heat from exhaust gas from the first heat receiver.

3. The coating drier facility according to claim 1 or 2, wherein
the heater includes:
a fuel amount adjusting mechanism; and
a combustion air amount adjusting mechanism.

4. The coating drier facility according to claim 3, wherein
the combustion air amount adjusting mechanism adjusts an internal temperature of a combustion treatment furnace of the heater so that the internal temperature is within a predetermined range.

5. The coating drier facility according to any one of claims 1 to 4, further comprising:
an outside air receiver for introducing outside air into the drier chamber and including an outside air introducing amount adjusting mechanism.

6. The coating drier facility according to claim 5, wherein
the heater includes a combustion air amount adjusting mechanism, and
the coating drier facility controls the outside air introducing amount adjusting mechanism and the combustion air amount adjusting mechanism so that respective amounts of the outside air and combustion air are substantially equal to each other.
